# EUROPEAN PATENT SPECIFICATION

(11) **EP 2 867 384 B1**
(45) Date of publication and mention of the grant of the patent: **03.10.2018**
(21) Application number: 13810362.7
(22) Date of filing: 26.06.2013
(51) Int. Cl.: C23C 10/32, C23C 10/52, B22F 1/00, F01D 5/28, C09D 5/00

(54) **CHROMIUM DIFFUSION COATING**
CHROMDIFFUSIONSBESCHICHTUNG
REVÊTEMENT PAR DIFFUSION DE CHROME

(30) Priority: 28.06.2012 US 201213536141
(43) Date of publication of application: 06.05.2015
(73) Proprietor: United Technologies Corporation, Farmington, CT 06032 (US)
(72) Inventor: COLLINS, Kevin, L., Mansfield, Texas 76063 (US); MINOR, Michael, J., US/Arlington, Texas 76018 (US)
(74) Representative: Dehns
(86) International application number: PCT/US2013/047752
(87) International publication number: WO 2014/004599

(56) References cited:
- EP-A2- 2 607 515
- WO-A1-2010/022698
- JP-A- H05 156 423
- KR-B1- 100 305 728
- US-A- 4 148 936
- US-A- 5 589 220
- US-A- 5 972 429
- US-A1- 2010 124 670
- US-A1- 2011 058 951

## Description

### BACKGROUND

This disclosure relates to improvements in forming chromium diffusion coatings.

Articles that are subject to corrosion, such as gas turbine engine components, may include a coating to protect an underlying material from corrosion. Vapor deposition techniques can be used to deposit chromium for diffusion into the underlying material. However, if the coating is to be applied only to specific, localized areas of the article, masking off the areas that are not to be coated is ineffective because chromium vapor in the vapor deposition infiltrates under the maskant.

Alternatively, there is a slurry technique for applying a diffusion coating. For instance, the slurry includes active metals that are to be diffused into the component, an activator such as ammonium chloride, inert material such as alumina and a binder to hold the other constituents of the slurry together. A challenge in using this slurry technique, however, is that the active metals diffuse laterally with regard to the area on which the slurry is applied such that the resulting diffusion coating is formed over an uncontrolled area that is larger than desired. Alternatively, there is also the use of a lacquer coat for selectively applying a diffusion coating, as described in document US 2011/0058951 A1.

### SUMMARY

A method of diffusion coating an article according to an exemplary aspect of the present disclosure includes applying a mixture to an article. The mixture consists essentially of an active coating metal of chromium powder, alumina powder, a diffusion activator of chromium(III) chloride and an organic carrier material. The article is then heated at a diffusion temperature to cause diffusion of the chromium powder into the article to form a diffusion coating on the article. Relative to a total combined weight of the chromium powder, the alumina powder and the chromium(III) chloride, the mixture has 25-60% by weight of the chromium powder, 1.5-1.7% by weight of the chromium(III) chloride and a balance of the alumina powder.

In a further non-limiting embodiment of any of the foregoing examples, the mixture has 50% or less by weight of the chromium powder.

In a further non-limiting embodiment of any of the foregoing examples, the article is made of a nickel-based super alloy.

In a further non-limiting embodiment of any of the foregoing examples, the heating of the article includes heating in an argon environment.

In a further non-limiting embodiment of any of the foregoing examples, the diffusion temperature is greater than 1900°F/1030°C.

In a further non-limiting embodiment of any of the foregoing examples, the chromium powder and the alumina powder each have -325 mesh powder size.

A further non-limiting embodiment of any of the foregoing examples includes applying the mixture to a localized portion of the article.

An article for diffusion coating according to an exemplary aspect of the present disclosure includes forming a mixture consisting essentially of an active coating metal of chromium powder, alumina powder, a diffusion activator of chromium(III) chloride and an organic carrier material, and applying the mixture on an article that is to be diffusion coated. Relative to a total combined weight of the chromium powder, the alumina powder and the chromium(III) chloride, the mixture has 25-60% by weight of the chromium powder, 1.5-1.7% by weight of the chromium(III) chloride and a balance of the alumina powder.

In a further non-limiting embodiment of any of the foregoing examples, the article is made of a nickel-based superalloy.

An article for diffusion coating according to an exemplary aspect of the present disclosure includes a surface that is to be diffusion coated and a mixture disposed on the surface to be diffusion coated. The mixture consists essentially of an active coating metal of chromium powder, alumina powder, a diffusion activator of chromium(III) chloride and an organic carrier material. Relative to a total combined weight of the chromium powder, the alumina powder and the chromium(III) chloride, the mixture has 25-60% by weight of the chromium powder, 1.5-1.7% by weight of the chromium(III) chloride and a balance of the alumina powder.

In a further non-limiting embodiment of any of the foregoing examples, the article is made of a nickel-based super alloy.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example method of diffusion coating an article.
Figure 2 illustrates an example method of preparing an article for diffusion coating.
Figure 3 shows an example article that is prepared for diffusion coating.

### DETAILED DESCRIPTION

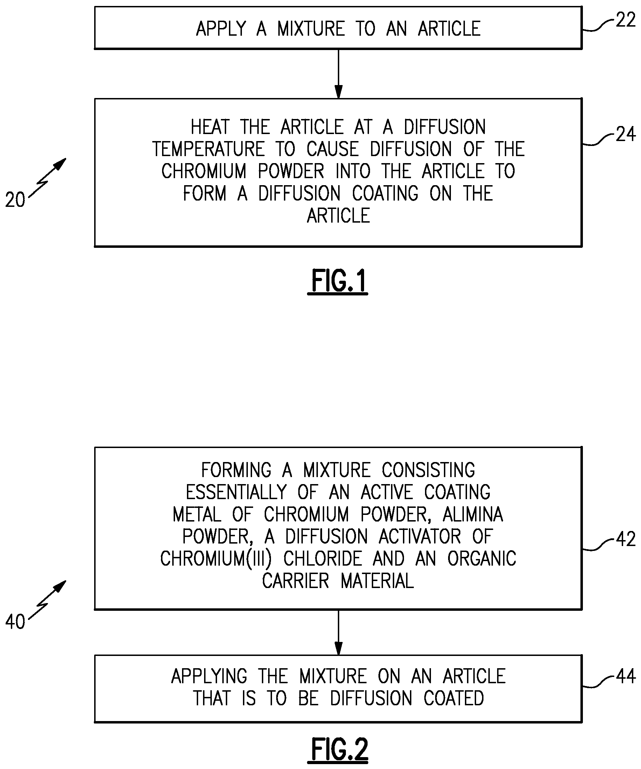

Figure 1 illustrates an example method 20 of diffusion coating an article, such as an article made of a nickel-based superalloy. As will be described, the method 20 involves the use of a mixture that is tailored to provide effective chromium diffusion into the nickel-based superalloy of the article, while reducing lateral "smearing" of the resulting diffusion coating.

In this example, the method 20 includes an application step 22 and a heating step 24. The application step 22 includes applying the mixture to the article, such as by painting the mixture onto the article, dipping the article in the mixture or spraying the mixture onto the article.

After the application step 22, the article is heated in the heating step 24 to diffuse the chromium powder into the article to form the chromium diffusion coating. As an example, the heating is conducted in a furnace having a continual flow of argon to produce an argon environment, in which argon is the most abundant gas, at a temperature greater than 1900°F/1038°C, such as 1950°F/1066°C to 2000°F/1094°C. The article is heated for a selected amount of time, depending upon a desired thickness of the resulting chromium diffusion coating. In some examples, the selected amount of time is between 6 and 16 hours and the final chromium diffusion coating (layer) includes at least 20% by weight of chromium. Alternatively, the article may first be heated in the heating step 24 and the mixture then applied to the article once heated.

The mixture consists essentially of an active coating metal of chromium powder, alumina powder, a diffusion activator of chromium(III) chloride, which can be provided in a powder form, and an organic carrier material. For example, the mixture may include only the listed constituents and inadvertent impurities that do not influence the properties of the mixture. The chromium powder and the alumina powder each have a -325 mesh powder size. In one example, the organic carrier material is B-4 carrier material (APV Engineered Coatings), but other organic carrier materials can be used.

The composition of the mixture is tailored for effective diffusion of the chromium powder into the article over a controlled area. As an example, where there is a desire to apply a chromium diffusion coating over only a localized portion of the article, the mixture is applied only to the area to be coated and diffuses into the applied area with little lateral diffusion. For example, any remnant vapor generated from the mixture during heating is carried away in the argon environment such that the vapor does not deposit outside of the applied area. Thus, the diffusion is limited to the applied area rather than "smearing" laterally. The mixture thus provides better control over the size of the coated area. To this end, the mixture has, relative to a total combined weight of the chromium powder, the alumina powder and the chromium(III) chloride, 1.5-1.7% by weight of the chromium(III) chloride. Other activators, such as other halide-based activators, vary in effectiveness with regard to different active coating metals, including chromium. However, the chromium(III) chloride, in the prescribed amount, is particularly effective for facilitating the diffusion of chromium powder into nickel-based superalloys.

The mixture, again relative to the total combined weight, also has 25-60% by weight of the chromium powder and a remainder of the alumina powder. In one further example, the chromium powder, relative to the total combined weight, is present in an amount of 50% or less by weight.

The mixture, again relative to the total combined weight, also has about 25% to about 60% by weight of the chromium powder and a remainder of the alumina powder. In one further example, the chromium powder, relative to the total combined weight, is present in an amount of about 50% or less by weight.

The amounts of the chromium(III) chloride diffusion activator and the chromium powder are selected in correspondence, for effective diffusion and area control. The relationship between the amount of the chromium powder and the amount of the chromium(III) chloride can be represented as a ratio. For instance, the mixture, relative to the total combined weight, includes X% by weight of the chromium powder and Z% by weight of the chromium(III) chloride in a ratio of X/Z that is between 14 and 40. Providing the chromium powder and the chromium(III) chloride in ratio described ensures effective diffusion of the chromium powder into the article and control over the area of the article into which the chromium powder diffuses. That is, the mixture herein limits lateral diffusion that would otherwise enlarge the coating area.

Figure 2 illustrates a related method 40 that can be used in conjunction with the method 20, for example. The method 40 includes a forming step 42 and an application step 44. The application step 44 is similar to the application step 22 described above.

The forming step 42 includes forming the mixture, with the composition as described above. As an example, the organic carrier material is a liquid material to which the chromium powder, the alumina powder and the chromium(III) chloride (powder) are added in order to form the mixture. The amount of organic carrier material that is used in the mixture can be varied, depending upon the desired viscosity or texture of the mixture. That is, a greater amount of the organic carrier material may be used to produce a more fluid mixture (e.g., a slurry). Alternatively, a lesser amount of the organic carrier material can be used to form a less fluid, or semi-solid, mixture. In the method 40, the article may then subsequently be heated as in the heating step 24 of the method 20. Similarly, in further examples, the method 20 may include the forming step 42 of method 40, prior to the application step 22.

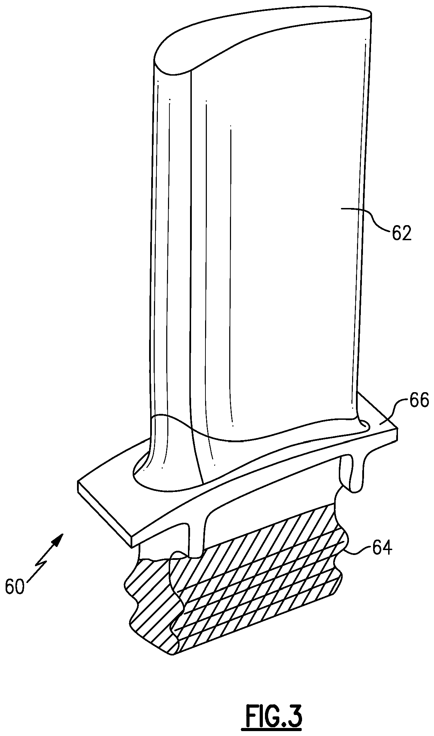

Figure 3 shows an article 60, which in this example is a gas turbine engine turbine blade. It is to be understood, however, that the methods 20 and 40 will also benefit other articles or other gas turbine engine components. The article 60 has been prepared for diffusion coating by applying the mixture onto a portion of the article 60 according to the application step 22.

In this example, the article 60 generally includes an airfoil portion 62 and a root portion 64. The airfoil portion 62 extends outwardly from one side of a platform portion 66 and the root portion 64 extends outwardly on an opposite side of the platform portion 66. Here, a chromium diffusion coating is to be applied only to the root portion 64 and thus a mixture 68 is applied only to the root portion 64, as indicated by the cross-hatching in the drawing. The article 60 is thus ready for diffusion coating according to the heating step 24 of method 20.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. The scope of legal protection given to this disclosure can only be determined by studying the following claims.

## Claims

1. A method of diffusion coating an article, the method comprising:
applying a mixture to an article, the mixture consisting essentially of an active coating metal of chromium powder, alumina powder, a diffusion activator of chromium(III) chloride and an organic carrier material; and
heating the article at a diffusion temperature to cause diffusion of the chromium powder into the article to form a diffusion coating on the article;
**characterised in that**, relative to a total combined weight of the chromium powder, the alumina powder and the chromium(III) chloride, the mixture has 25-60% by weight of the chromium powder, 1.5-1.7% by weight of the chromium(III) chloride and a balance of the alumina powder.

2. The method as recited in claim 1, wherein the heating of the article includes heating in an argon environment.

3. The method as recited in claim 1 or claim 2, wherein the diffusion temperature is greater than 1900°F/1030°C.

4. The method as recited in any one of the preceding claims, wherein the chromium powder and the alumina powder each have a -325 mesh powder size.

5. The method as recited in any one of the preceding claims, further comprising applying the mixture to a localized portion of the article.

6. A method of preparing an article for diffusion coating, the method comprising:
forming a mixture consisting essentially of an active coating metal of chromium powder, alumina powder, a diffusion activator of chromium(III) chloride and an organic carrier material; and
applying the mixture on an article that is to be diffusion coated;
**characterised in that**, relative to a total combined weight of the chromium powder, the alumina powder and the chromium(III) chloride, the mixture has 25-60% by weight of the chromium powder, 1.5-1.7% by weight of the chromium(III) chloride and a balance of the alumina powder.

7. The method as recited in any one of the preceding claims wherein the article is made of a nickel-based superalloy.

8. The method as recited in any one of claims 1 to 5, wherein the mixture has 50% or less by weight of the chromium powder.

9. An article for diffusion coating, the article comprising:
a body including a surface that is to be diffusion coated; and
a mixture disposed on the surface that is to be diffusion coated, the mixture consisting essentially of an active coating metal of chromium powder, alumina powder, a diffusion activator of chromium(III) chloride and an organic carrier material;
**characterised in that**, relative to a total combined weight of the chromium powder, the alumina powder and the chromium(III) chloride, the mixture has 25-60% by weight of the chromium powder, 1.5-1.7% by weight of the chromium(III) chloride and a balance of the alumina powder.

10. The article according to claim 9, wherein the article is made of a nickel-based superalloy.

## Patentansprüche

1. Verfahren zur Diffusionsbeschichtung eines Gegenstands, wobei das Verfahren Folgendes umfasst:
Anwenden einer Mischung auf einen Gegenstand, wobei die Mischung im Wesentlichen aus einem aktiven Beschichtungsmetall aus Chrompulver, Aluminiumoxidpulver, einem Diffusionsaktivierungsmittel aus Chrom(III)-chlorid und einem organischen Trägermaterial besteht; und
Erhitzen des Gegenstands auf eine Diffusionstemperatur, um Diffusion des Chrompulvers in den Gegenstand zu veranlassen, um eine Diffusionsbeschichtung auf dem Gegenstand zu bilden;
**dadurch gekennzeichnet, dass** relativ zu einem kombinierten Gesamtgewicht des Chrompulvers, des Aluminiumoxidpulvers und des Chrom(III)-Chlorids die Mischung 25-60 Gew.-% Chrompulver, 1,5-1,7 Gew.-% Chrom(III)-chlorid und einen Rest Aluminiumoxidpulver aufweist.

2. Verfahren nach Anspruch 1, wobei das Erhitzen des Gegenstands das Wärmen in einer Argonumgebung beinhaltet.

3. Verfahren nach Anspruch 1 oder Anspruch 2, wobei die Diffusionstemperatur höher ist als 1900 °F/1030 °C.

4. Verfahren nach einem der vorhergehenden Ansprüche, wobei das Chrompulver und das Aluminiumoxidpulver jeweils eine Pulverkorngröße von -325 aufweisen.

5. Verfahren nach einem der vorhergehenden Ansprüche, das ferner Anwenden der Mischung auf einen lokalisierten Abschnitt des Gegenstands umfasst.

6. Verfahren zum Vorbereiten eines Gegenstands für Diffusionsbeschichtung, wobei das Verfahren Folgendes umfasst:
Bilden einer Mischung, die im Wesentlichen aus einem aktiven Beschichtungsmetall aus Chrompulver, Aluminiumoxidpulver, einem Diffusionsaktivierungsmittel aus Chrom(III)-chlorid und einem organischen Trägermaterial besteht; und
Anwenden der Mischung auf einen Gegenstand, der diffusionsbeschichtet werden soll;
**dadurch gekennzeichnet, dass** relativ zu einem kombinierten Gesamtgewicht des Chrompulvers, des Aluminiumoxidpulvers und des Chrom(III)-Chlorids, die Mischung 25-60 Gew.-% Chrompulver, 1,5-1,7 Gew.-% Chrom(III)-chlorid und einen Rest Aluminiumoxidpulver aufweist.

7. Verfahren nach einem der vorhergehenden Ansprüche, wobei der Gegenstand aus einer nickelbasierten Superlegierung hergestellt ist.

8. Verfahren nach einem der Ansprüche 1 bis 5, wobei die Mischung 50 Gew.-% oder weniger an Chrompulver aufweist.

9. Gegenstand zur Diffusionsbeschichtung, wobei der Gegenstand Folgendes umfasst:
einen Körper, einschließlich einer Oberfläche, die diffusionsbeschichtet werden soll; und
eine Mischung, die auf der Fläche, die diffusionsbeschichtet werden soll, angeordnet ist, wobei die Mischung im Wesentlichen aus einem aktiven Beschichtungsmetall aus Chrompulver, Aluminiumpulver, einem Diffusionsaktivierungsmittel aus Chrom(III)-chlorid und einem organischen Trägermaterial besteht;
**dadurch gekennzeichnet, dass** relativ zu einem kombinierten Gesamtgewicht des Chrompulvers, Aluminiumoxidpulvers und des Chrom(III)-Chlorids, die Mischung 25-60 Gew.-% Chrompulver, 1,5-1,7 Gew.-% Chrom(III)-chlorid und einen Rest Aluminiumoxidpulver aufweist.

10. Gegenstand nach Anspruch 9, wobei der Gegenstand aus einer nickelbasierten Superlegierung hergestellt ist.

## Revendications

1. Procédé de revêtement par diffusion d'un article, le procédé comprenant :
l'application d'un mélange à un article, le mélange consistant essentiellement en un métal de revêtement actif de poudre de chrome, de poudre d'alumine, un activateur de diffusion de chlorure de chrome (III) et un matériau de vecteur organique ; et
le chauffage de l'article à une température de diffusion pour provoquer la diffusion de la poudre de chrome dans l'article pour former un revêtement par diffusion sur l'article ;
**caractérisé en ce que**, par rapport à un poids combiné total de la poudre de chrome, de la poudre d'alumine et du chlorure de chrome (III), le mélange comporte de 25 à 60 % en poids de la poudre de chrome, de 1,5 à 1,7 % en poids du chlorure de chrome (III) et le reste de la poudre d'alumine.

2. Procédé selon la revendication 1, dans lequel le chauffage de l'article comporte le chauffage dans un environnement d'argon.

3. Procédé selon la revendication 1 ou la revendication 2, dans lequel la température de diffusion est supérieure à 1 030 °C/1 900 °F.

4. Procédé selon l'une quelconque des revendications précédentes, dans lequel la poudre de chrome et la poudre d'alumine ont chacune une taille de poudre de -325 mesh.

5. Procédé selon l'une quelconque des revendications précédentes, comprenant en outre l'application du mélange à une portion localisée de l'article.

6. Procédé de préparation d'un article en vue d'un revêtement par diffusion, le procédé comprenant :
la formation d'un mélange consistant essentiellement en un métal de revêtement actif de poudre de chrome, de poudre d'alumine, un activateur de diffusion de chlorure de chrome (III) et un matériau de vecteur organique ; et
l'application du mélange sur un article qui doit être revêtu par diffusion ;
**caractérisé en ce que**, par rapport à un poids combiné total de la poudre de chrome, de la poudre d'alumine et du chlorure de chrome (III), le mélange comporte de 25 à 60 % en poids de la poudre de chrome, de 1,5 à 1,7 % en poids du chlorure de chrome (III) et le reste de la poudre d'alumine.

7. Procédé selon l'une quelconque des revendications précédentes, dans lequel l'article est réalisé en un superalliage à base de nickel.

8. Procédé selon l'une quelconque des revendications 1 à 5, dans lequel le mélange comporte 50 % ou moins en poids de la poudre de chrome.

9. Article pour un revêtement par diffusion, l'article comprenant :
un corps incluant une surface qui doit être revêtue par diffusion ; et
un mélange disposé sur la surface qui doit être revêtue par diffusion, le mélange consistant essentiellement en un métal de revêtement actif de poudre de chrome, de poudre d'alumine, un activateur de diffusion de chlorure de chrome (III) et un matériau de vecteur organique ;
**caractérisé en ce que**, par rapport à un poids combiné total de la poudre de chrome, de la poudre d'alumine et du chlorure de chrome (III), le mélange comporte de 25 à 60 % en poids de la poudre de chrome, de 1,5 à 1,7 % en poids du chlorure de chrome (III) et le reste de la poudre d'alumine.

10. Article selon la revendication 9, dans lequel l'article est réalisé en un superalliage à base de nickel.
